# EUROPÄISCHE PATENTSCHRIFT

(11) **EP 0 745 042 B1**
(45) Veröffentlichungstag und Bekanntmachung des Hinweises auf die Patenterteilung: **10.09.1997**
(21) Anmeldenummer: 95908938.4
(22) Anmeldetag: 14.02.1995
(51) Int. Cl.: B62D 5/08

(54) **HILFSKRAFTLENKUNG FÜR KRAFTFAHRZEUGE**
POWER STEERING FOR MOTOR VEHICLES
DIRECTION ASSISTEE POUR VEHICULES A MOTEUR

(30) Priorität: 19.02.1994 DE 4405300
(43) Veröffentlichungstag der Anmeldung: 04.12.1996
(73) Patentinhaber: ZF FRIEDRICHSHAFEN Aktiengesellschaft, 88038 Friedrichshafen (DE)
(72) Erfinder: LANG, Armin, D-73529 Schwäbisch Gmünd (DE)
(86) Internationale Anmeldenummer: EP9500532
(87) Internationale Veröffentlichungsnummer: WO9522480

(56) Entgegenhaltungen:
- WO-A-94/19226
- WO-A-94/29158
- DE-A- 4 126 020

## Beschreibung

Die Erfindung betrifft eine Hilfskraftlenkung für Kraftfahrzeuge nach dem Oberbegriff des Anspruchs 1. Die Hilfskraftlenkung enthält ein Lenkventil, das zwei Einlaß-Sitzventile und zwei Auslaß-Sitzventile aufweist, die über eine Betätigungseinrichtung in Abhängigkeit von einer Drehbewegung einer Lenkspindel verstellbar sind. Die Schließkörper der Auslaß-Sitzventile und deren Betätigungsstößel werden durch die Kraft von Zentrierfedern in Richtung auf die Betätigungseinrichtung gedrückt, so daß die Betätigungssstößel an der Betätigungseinrichtung anliegen. Dabei werden die Schließkörper der Einlaß-Sitzventile durch die Kraft von Druckfedern in Schließrichtung beaufschlagt, so daß die Einlaß-Sitzventile in der Neutralstellung des Lenkventils geschlossen sind. Die Auslaß-Sitzventile sind in der Neutralstellung des Lenkventils geöffnet. Die Einlaß-Sitzventile werden erst nach dem Schließen des jeweiligen zugehörigen Auslaß-Sitzventils geöffnet.

Eine derartige Hilfskraftlenkung mit geschlossener Mitte ist bekannt aus der DE-A1-41 26 020. Eine solche Hilfskraftlenkung weist einen linearen Kennlinienverlauf auf. Dies bedeutet, daß bei hohen Servodrücken das Betätigungsmoment stark ansteigen kann.

Bei heute gebräuchlichen Hilfskraftlenkungen mit offener Mitte ist es jedoch üblich, das Betätigungsmoment ab einem bestimmten Druck im Servomotor nur noch unwesentlich zu erhöhen. Dies bedeutet, daß die Kennlinie ab diesem bestimmten Punkt steiler verläuft. Man nennt diesen Effekt "Abschneidung" oder "Betätigungsmomentbegrenzung".

Der Erfindung liegt die Aufgabe zugrunde, eine gattungsgemäße Hilfskraftlenkung, d. h. eine Hilfskraftlenkung mit geschlossener Mitte, derart zu verbessern, daß mit ihrem Lenkventil Kennlinien erzeugt werden können, die in ihrer Form den Kennlinien heute gebräuchlicher Hilfskraftlenkungen mit offener Mitte möglichst nahe kommen.

Diese Aufgabe wird durch die im Anspruch 1 gekennzeichnete Hilfskraftlenkung gelöst. Die Lösung erfolgt dadurch, daß bei einer gattungsgemäßen Hilfskraftlenkung für jede Seite des Lenkventils ein Begrenzungskolben vorgesehen ist, der einerseits von dem in einem Arbeitsraum eines Servomotors herrschenden Druck und andererseits von einer Begrenzungsfeder beaufschlagt ist. Die Begrenzungsfeder hält in Neutralstellung des Lenkventils den Begrenzungskolben in einem Abstand von dem Schließkörper des Einlaß-Sitzventils. Dadurch werden ab einem bestimmten Servodruck die mechanischen Zentrierkräfte des Lenkventils reduziert. Der Begrenzungskolben wirkt dann auf den Schließkörper des Einlaß-Sitzventils ein, wenn die Kraft des auf den Begrenzungskolben wirkenden Druckes die Kraft der Begrenzungsfeder übersteigt. Wesentlich ist dabei, daß der Begrenzungskolben auf den Schließkörper des Einlaß-Sitzventils wirkt und nicht auf den Schließkörper des Auslaß-Sitzventils. Dadurch wird erreicht, daß beim Zurücklenken eine Ventilkennlinie entsteht, nach der beim Absinken des Druckes im Servomotor das Betätigungsmoment am Lenkhandrad stetig abnimmt.

Die Funktion des Begrenzungskolbens wird dadurch verbessert, daß der Querschnitt des Begrenzungskolbens kleiner ausgeführt ist als der Querschnitt des Schließkörpers des Einlaß-Sitzventils.

Bis hierher ist die Lösung Gegenstand der älteren Patentanmeldung DE-A-4335755. Bei dieser Ausführung muß die Zentrierfeder so dimensioniert sein, daß sie alleine die volle mechanische Kraft zur Anlage des Betätigungsstößels an der Betätigungseinrichtung aufbringen kann. Die Feder muß daher entsprechend groß dimensioniert sein.

Dieser Nachteil soll vermieden und ein kompakterer Aufbau ermöglicht werden. Gleichzeitig sollen die Montage und die Einstellung des Ventils vereinfacht werden.

Dies geschieht dadurch, daß sich je eine Zentrierfeder und eine Begrenzungsfeder an ihren dem Betätigungsstößel zugewandten Enden an einem gemeinsamen Federteller abstützen. Der Federteller steht in Wirkverbindung mit dem Betätigungsstößel. Dadurch wirken beide Federn, die Zentrierfeder und die Begrenzungsfeder, gemeinsam auf den Betätigungsstößel, d. h., daß die Begrenzungsfeder gleichzeitig einen Teil der Zentrierfunktion mit übernimmt, wodurch die Zentrierfeder entsprechend schwächer ausgelegt werden kann.

Zweckmäßige und vorteilhafte Ausgestaltungen der Erfindung sind in den Unteransprüchen angegeben.

In einer bevorzugten Ausführungsform wird die Zentrierfeder koaxial innerhalb der Begrenzungsfeder angeordnet. Damit der Federteller auf den Betätigungsstößel einwirken kann, wird der Betätigungsstößel mit einem zylindrischen Fortsatz versehen, der den Begrenzungskolben abgedichtet durchdringt und bis zu dem Federteller reicht. Durch einen Kanal in dem Fortsatz wird eine Verbindung hergestellt von dem einen Arbeitsraum des Servomotors zu einem an den Begrenzungskolben angrenzenden Begrenzungsraum. Durch diesen integrierten Durchgangskanal kann eine außenliegende Leitungsverbindung entfallen.

Besonders einfach montiert und eingestellt werden kann das Ventil dann, wenn je ein Einlaß-Sitzventil und ein Auslaß-Sitzventil in einer einschiebbaren bzw. einschraubbaren Patrone zusammengefaßt werden. Die beiden Patronen können dann von einer Seite her in das Ventilgehäuse eingesetzt werden. Die innere Patrone wird eingeschoben, die äußere wird eingeschraubt. Die äußere, eingeschraubte Patrone weist zwei kaaxial zueinander angeordnete Einstellschrauben auf. Durch eine Verstellung der radial äußeren Einstellschraube kann auf einfache Weise der Abstand der beiden Patronen zueinander und damit die Länge der offenen Ringspalte der Auslaß-Sitzventile eingestellt werden. Wird dagegen die radial innere Einstellschraube verstellt, so läßt sich dadurch die Lage der beiden Auslaß-Sitzventile zu der Betätigungseinrichtung und damit ihre Symmetrie einstellen.

Im folgenden wird die Erfindung anhand eines in der Zeichnung dargestellten Ausführungsbeispieles näher erläutert.
Es zeigen:

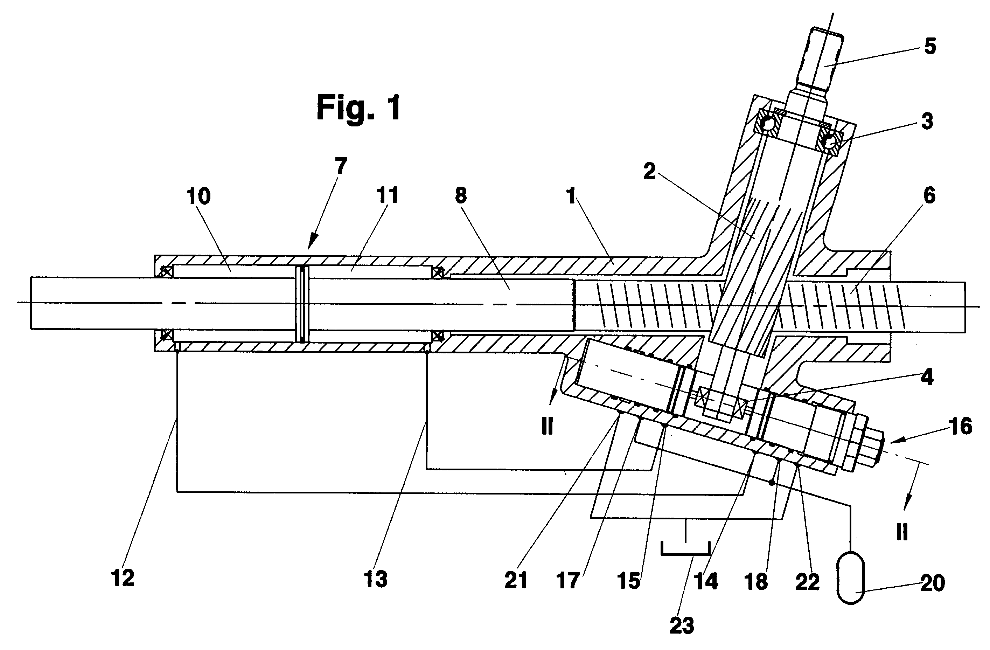

- Fig. 1: einen Längsschnitt durch die erfindungsgemäße Hilfskraftlenkung;
- Fig. 2: den Längsschnitt durch das Lenkventil der Hilfskraftlenkung der Fig. 1 nach der Linie II-II.

In einem Lenkgehäuse 1 ist ein Ritzel 2 in zwei Lagern 3 und 4 drehbar gelagert. Das Ritzel 2 trägt an seinem einen Ende einen Lenkspindelanschluß 5 für den Anschluß an ein Lenkorgan, beispielsweise eine nicht dargestellte Lenkspindel mit einem Lenkhandrad. Eines der Lager, vorzugsweise das Lager 3, das in der Nähe des Lenkspindelanschlusses 5 liegt, ist als Festlager ausgebildet. Das andere Lager, vorzugsweise das Lager 4, das dem Lenkspindelanschluß 5 abgewandt ist, ist als Loslager ausgebildet. Mit "Loslager" wird hier ein Lager, beispielsweise ein Rillenkugellager, bezeichnet, das zwar in axialer Richtung festgelegt sein kann, in radialer Richtung aber innerhalb bestimmter Grenzen bewegt werden kann. Dadurch ist das Ritzel 2 schwenkbar gelagert.

Das Ritzel 2 steht über seine Verzahnung in Eingriff mit einer Zahnstange 6, die in dem Lenkgehäuse 1 axial verschiebbar geführt ist. Zur Hilfskraftunterstützung dient ein Servomotor 7, dessen Kolbenstange 8 fest mit der Zahnstange 6 verbunden ist. Der Servomotor 7 enthält zwei Arbeitsräume 10 und 11, die über Arbeitsleitungen 12 und 13 mit zwei Zylinderanschlüssen 14 und 15 eines Lenkventils 16 verbunden sind. Das Lenkventil 16 weist außerdem noch zwei Zulaufanschlüsse 17 und 18 auf, die an einen Speicher 20 angeschlossen sind. Der Speicher 20 wird von einer nicht dargestellten Servopumpe mit Druckmittel versorgt. An zwei Rücklaufanschlüssen 21 und 22 ist ein Behälter 23 angeschlossen.

Das Lenkventil 16 enthält zwei Einlaß-Sitzventile 24 und 25 und zwei Auslaß-Sitzventile 26 und 27. Jeweils ein Einlaß-Sitzventil 24 bzw. 25 und ein Auslaß-Sitzventil 26 und 27 sind koaxial zueinander angeordnet.

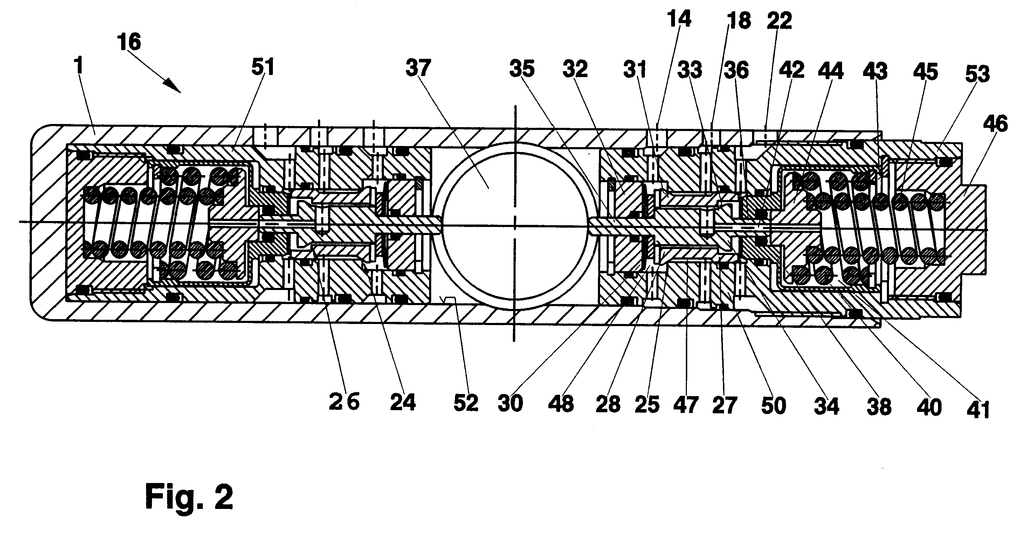

Die beiden Teile des Lenkventils 16 mit je einem Einlaß-Sitzventil 24 bzw. 25 und je einem Auslaß-Sitzventil 26 bzw. 27 sind im wesentlichen gleich ausgebildet. Der genauere Aufbau des Lenkventils 16 wird deshalb im folgenden anhand nur eines Teiles - in Fig. 2 der rechte Teil - des Lenkventils 16 mit dem Einlaß-Sitzventil 25 und dem Auslaß-Sitzventil 27 beschrieben.

In der Neutralstellung des Lenkventils 1 ist das Einlaß-Sitzventil 25 geschlossen. Dies wird dadurch erreicht, daß dessen Schließkörper 28 durch die Kraft einer Zuhaltefeder 30 in Schließrichtung gegen einen gehäusefesten Ventilsitz 31 beaufschlagbar ist. Die Zuhaltefeder 30 stützt sich einerseits an dem Schließkörper 28 und andererseits an einem gehäusefesten Bauteil 32 ab. Sie könnte sich aber mit gleicher Wirkung auch am unten beschriebenen Betätigungsstößel 35 abstützen.

Das Auslaß-Sitzventil 27 ist gebildet durch einen Ventilsitz 33, der an dem Schließkörper 28 des Einlaß-Sitzventils 25 ausgebildet ist und durch einen Schließkörper 34. Der Schließkörper 34 besitzt auf seiner einen Seite einen Betätigungsstößel 35 und auf seiner anderen Seite einen Fortsatz 36. Der Betätigungsstößel 35 wirkt mit einer Betätigungseinrichtung 37 zusammen, die beispielsweise durch den Außenring des Loslagers 4 gebildet ist. Die Bedeutung des Fortsatzes 36 wird im weiteren Verlauf der Beschreibung erklärt.

Zusätzlich zu dem Einlaß-Sitzventil 25 und dem Auslaß-Sitzventil 27 ist ein Begrenzungskolben 38 vorgesehen. Der Begrenzungskolben 38 ist in die eine Richtung, die dem Einlaß-Sitzventil 25 und dem Auslaß-Sitzventil 27 abgewandt ist, von einer Begrenzungsfeder 40 beaufschlagt. In seine andere Richtung ist der Begrenzungskolben 38 von einem Druck beaufschlagt, der in einem angrenzenden Begrenzungsraum 41 herrscht. Der Begrenzungsraum 41 ist über einen Durchgangskanal 42 in dem Fortsatz 36, der den Begrenzungskolben 38 abgedichtet durchdringt, verbunden mit dem Arbeitsraum 10 des Servomotors 7, so daß in dem Begrenzungsraum 41 jeweils der gleiche Druck herrscht wie in dem Arbeitsraum 10. In der Neutralstellung des Lenkventils ist die Kraft der Begrenzungsfeder 40 größer als die Kraft des in dem Begrenzungsraum 41 herrschenden Druckes. Damit wird der Begrenzungskolben 38 in der Neutralstellung des Lenkventils 16 in Anlage gehalten an einer Anschlagschulter 43 des Lenkgehäuses 1. Zwischen dem Begrenzungskolben 38 und dem Schließkörper 28 des Einlaß-Sitzventils 25 besteht in der Neutralstellung des Lenkventils ein Abstand, der erst dann überbrückt wird, wenn der Begrenzungskolben 38 durch den in dem Begrenzungsraum 41 herrschenden Druck gegen die Kraft der Begrenzungsfeder 40 in Richtung auf den Schließkörper 28 verschoben wird. Der wirksame Querschnitt des Begrenzungskolbens 38, der von dem in dem Begrenzungsraum 41 herrschenden Druck beaufschlagt wird, ist kleiner als der wirksame Querschnitt des Schließkörpers 28 des Einlaß-Sitzventils 25.

Die Begrenzungsfeder 40, die im Inneren eines topfförmigen Fortsatzes des Begrenzungskolbens 38 angeordnet ist, stützt sich einerseits an dem Begrenzungskolben 38 und andererseits an einem Federteller 44 ab. An dem Federteller 44 stützt sich außerdem eine Zentrierfeder 45 ab. Die Zentrierfeder 45 wird an ihrem anderen Ende von einem gehäusefesten Bauteil in der Form einer inneren Einstellschraube 46 abgestützt.

Der Federteller 44 steht in Wirkverbindung mit dem Fortsatz 36 des Schließkörpers 34 und damit mit dem Betätigungsstößel 35. Über den Federteller 44 drücken somit sowohl die Zentrierfeder 45 als auch die Begrenzungsfeder 40 auf den Betätigungsstößel 35 und halten diesen in Anlage an der Betätigungseinrichtung 37. Die Zentrierfeder 45 ist zweckmäßigerweise koaxial innerhalb der Begrenzungsfeder 40 angeordnet.

Der Speicher 20 ist über entsprechende Kanäle mit einer Zulaufkammer 47 verbunden, die an dem Einlaß-Sitzventil 25 angeordnet ist. Eine Kammer 48, die die Zuhaltefeder 30 enthält und die in der Neutralstellung des Lenkventils 16 von der Zulaufkammer 47 getrennt ist, ist mit dem Arbeitsraum 10 des Servomotors 7 verbunden, so daß in der Kammer 48 der gleiche Druck herrscht wie in dem Begrenzungsraum 41. Die Kammer 48 steht außerdem über das in der Neutralstellung des Lenkventils 16 offene Auslaß-Sitzventil 27 und entsprechende Kanäle mit dem Druckmittelbehälter 23 in Verbindung.

Das Einlaß-Sitzventil 25 und das Auslaß-Sitzventil 27 sind mit den dazugehörigen Bauelementen in einer einschraubbaren Patrone 50 zusammengefaßt. Das Einlaß-Sitzventil 24 und das Auslaß-Sitzventil 26 sind entsprechend in einer einschiebbaren Patrone 51 angeordnet. Beide Patronen 51 und 50 werden von einer Seite her in eine Sackbohrung 52 des Lenkgehäuses 1 eingeschoben bzw. eingeschraubt. Die einschraubbare Patrone 50 bildet gleichzeitig eine äußere Einstellschraube 53, die koaxial ausgebildet ist zu der inneren Einstellschraube 46.

Durch eine Verstellung der radial äußeren Einstellschraube 53 kann der Abstand der beiden Patronen 50 und 51 zueinander und damit die Summe der Längen der offenen Ringspalte der Auslaß-Sitzventile 26 und 27 eingestellt werden. Werden auf diese Weise die Ringspalte beispielsweise vergrößert, so ist zum Schließen dieser Spalte durch Drehung am Lenkhandrad ein entsprechend größeres Moment erforderlich.

Dreht man dagegen an der radial inneren Einstellschraube 46, so verstellt man die Lage der beiden Auslaß-Sitzventile 26 und 27 in bezug auf die Betätigungseinrichtung 37 und damit ihre Symmetrie. Wird die Einstellschraube 46 beispielsweise nach innen gedreht, d. h. in Fig. 2 nach links, so verkleinert sich der Ringspalt des Auslaß-Sitzventils 27 und der Ringspalt des Auslaß-Sitzventils 26 wird in gleichem Maße vergrößert. Dadurch kann eine Verstellung an dem linken, schwer zugänglichen Ventilteil entfallen.

Im folgenden wird die Funktion der erfindungsgemäßen Hilfskraftlenkung beschrieben: Wird durch eine Drehung des nicht dargestellten Lenkhandrades die Betätigungseinrichtung 37 beispielsweise nach links bewegt, so schließt zunächst das Auslaß-Sitzventil 27. Der Schließkörper 34 des Auslaß-Sitzventils 27 nimmt bei seiner weiteren Bewegung den Schließkörper 28 des Einlaß-Sitzventils 25 mit, so daß dieses Ventil öffnet. Das unter Druck stehende Druckmittel strömt aus der Zulaufkammer 47 in die Kammer 48 und damit sowohl in den Arbeitsraum 10 als auch in den Begrenzungsraum 41. Der in der Kammer 48 herrschende Druck wirkt als Rückwirkungsdruck auf den Schließkörper 28 des Einlaß-Sitzventils 25 und wirkt damit der Betätigungskraft der Betätigungseinrichtung 37 entgegen. Dieser Druck herrscht gleichzeitig in dem Begrenzungsraum 41 und drückt den Begrenzungskolben 38 gegen die Kraft der Begrenzungsfeder 43 in Fig. 2 nach links. Überschreitet diese Druckkraft die Vorspannkraft der Begrenzungsfeder 40, so bewegt sich der Begrenzungskolben 38 nach links und drückt auf den Schließkörper 28 des Einlaß-Sitzventils 25. Dadurch verringert sich der wirksame Querschnitt an dem Schließkörper 28 um den wirksamen Querschnitt des Begrenzungskolbens 38 und die Rückwirkungskraft vermindert sich entsprechend.

Steigt der Druck im Arbeitsraum 10 und damit in der Kammer 48 so weit an, daß die Kraft auf den Schließkörper 28 vermindert um die Kraft auf den Begrenzungskolben 38 die Vorspannkraft der Zentrierfeder 45 übersteigt, so hebt der Betätigungsstößel 35 von der Betätigungseinrichtung 37 ab. Danach findet keine weitere Drucksteigerung mehr statt.

Wird anschießend die Kraft an der Betätigungseinrichtung 37 vermindert, so bleibt der Druck in dem Arbeitsraum 10 so lange eingesperrt, bis die hydraulische Kraft an dem Schließkörper 34 des Auslaß-Sitzventils 27 die mechanische Schließkraft überwindet und das Auslaß-Sitzventil 27 öffnet.

### Bezugszeichen

- 1: Lenkgehäuse
- 2: Ritzel
- 3: Lager
- 4: Lager
- 5: Lenkspindelanschluß
- 6: Zahnstange
- 7: Servomotor
- 8: Kolbenstange
- 9: -
- 10: Arbeitsraum
- 11: Arbeitsraum
- 12: Arbeitsleitung
- 13: Arbeitsleitung
- 14: Zylinderanschluß
- 15: Zylinderanschluß
- 16: Lenkventil
- 17: Zulaufanschluß
- 18: Zulaufanschluß
- 19: -
- 20: Speicher
- 21: Rücklaufanschluß
- 22: Rücklaufanschluß
- 23: Behälter
- 24: Einlaß-Sitzventil
- 25: Einlaß-Sitzventil
- 26: Auslaß-Sitzventil
- 27: Auslaß-Sitzventil
- 28: Schließkörper (von 25)
- 29: -
- 30: Zuhaltefeder
- 31: Ventilsitz
- 32: gehäusefestes Bauteil
- 33: Ventilsitz
- 34: Schließkörper (von 27)
- 35: Betätigungsstößel
- 36: Fortsatz
- 37: Betätigungseinrichtung
- 38: Begrenzungskolben
- 39: -
- 40: Begrenzungsfeder
- 41: Begrenzungsraum
- 42: Durchgangskanal
- 43: Anschlagschulter
- 44: Federteller
- 45: Zentrierfeder
- 46: Einstellschraube
- 47: Zulaufkammer
- 48: Kammer
- 49: -
- 50: Patrone
- 51: Patrone
- 52: Sackbohrung
- 53: Einstellschraube

## Patentansprüche

1. Hilfskraftlenkung für Kraftfahrzeuge, mit einem Lenkventil (16), das zwei Einlaß-Sitzventile (24, 25) und zwei Auslaß-Sitzventile (26, 27) aufweist, die über eine Betätigungseinrichtung (37) in Abhängigkeit von einer Drehbewegung einer Lenkspindel verstellbar sind,
- wobei die Schließkörper (34) der Auslaß-Sitzventile (26, 27) und deren Betätigungsstößel (35) durch die Kraft von Zentrierfedern (45) in Richtung auf die Betätigungseinrichtung (37) beaufschlagt sind, so daß die Betätigungsstößel (35) an der Betätigungseinrichtung (37) anliegen, wobei sich die Zentrierfedern (45) an ihren den Betätigungsstößeln (35) abgewandten Enden an einem gehäusefesten Bauteil abstützen,
- wobei die Schließkörper (28) der Einlaß-Sitzventile (24, 25) durch die Kraft von Zuhaltefedern (30) in Schließrichtung beaufschlagt und dadurch in der Neutralstellung des Lenkventils (16) geschlossen sind,
- wobei die Auslaß-Sitzventile (26, 27) in der Neutralstellung des Lenkventils (16) über offene Ringspalte geöffnet sind und
- wobei die Einlaß-Sitzventile (24, 25) erst nach dem Schließen des jeweiligen zugehörigen Auslaß-Sitzventils (26, 27) geöffnet werden,
dadurch **gekennzeichnet,**
- daß für jede Seite des Lenkventils (16) ein Begrenzungskolben (38) vorgesehen ist,
- daß jeder Begrenzungskolben (38) einerseits von dem in einem Arbeitsraum (10, 11) eines Servomotors (7) herrschenden Druck und andererseits von einer Begrenzungsfeder (40) beaufschlagt ist, die in Neutralstellung des Lenkventils (16) den Begrenzungskolben (38) in einem Abstand von dem Schließkörper (28) des Einlaß-Sitzventils (25) hält,
- daß sich je eine Zentrierfeder (45) und eine Begrenzungsfeder (40) an ihren dem Betätigungsstößel (35) zugewandten Enden an einem gemeinsamen Federteller (44) abstützen, der in Wirkverbindung mit dem Betätigungsstößel (35) steht,
- daß der Begrenzungskolben (38) dann an dem Schließkörper (28) des Einlaß-Sitzventils (25) anliegt und auf diesen einwirkt, wenn die Kraft des auf den Begrenzungskolben (38) wirkenden Druckes die Kraft der Begrenzungsfeder (40) übersteigt und
- daß der wirksame Querschnitt des Begrenzungskolbens (38) kleiner ist als der wirksame Querschnitt des Schließkörpers (28) des Einlaß-Sitzventils (25).

2. Hilfskraftlenkung nach Anspruch 1, dadurch **gekennzeichnet,** daß die Zentrierfeder (45) koaxial innerhalb der Begrenzungsfeder (40) angeordnet ist.

3. Hilfskraftlenkung nach Anspruch 1 oder 2, dadurch **gekennzeichnet,** daß der Betätigungsstößel (35) einen zylindrischen Fortsatz (36) aufweist, der den Begrenzungskolben (38) abgedichtet durchdringt und die Wirkverbindung zu dem Federteller (44) herstellt.

4. Hilfskraftlenkung nach Anspruch 3, dadurch **gekennzeichnet,** daß in dem Fortsatz (36) ein Durchgangskanal (42) angeordnet ist für eine Verbindung des einen Arbeitsraumes (10, 11) des Servomotors (7) mit einem an den Begrenzungskolben (38) angrenzenden Begrenzungsraum (41).

5. Hilfskraftlenkung nach Anspruch 1, dadurch **gekennzeichnet,** daß die Begrenzungsfeder (40) in Neutralstellung des Lenkventils (16) den Begrenzungskolben (38) an eine Anschlagschulter (43) eines das Lenkventil (16) aufnehmenden Lenkgehäuses (1) anlegt.

6. Hilfskraftlenkung nach einem der Ansprüche 1 bis 5, dadurch **gekennzeichnet,** daß je ein Einlaß-Sitzventil (24, 25) und je ein Auslaß-Sitzventil (26, 27) in einer einschiebbaren bzw. einschraubbaren Patrone (51, 50) zusammengefaßt sind.

7. Hilfskraftlenkung nach Anspruch 6, dadurch **gekennzeichnet,** daß beide Patronen (50, 51) von einer Seite her in das Lenkgehäuse (1) eingesetzt werden.

8. Hilfskraftlenkung nach Anspruch 7, dadurch **gekennzeichnet,** daß die äußere, in das Lenkgehäuse (1) eingeschraubte Patrone (50) zwei koaxial zueinander angeordnete Einstellschrauben (46, 53) aufweist.

9. Hilfskraftlenkung nach Anspruch 8, dadurch **gekennzeichnet,** daß durch Verstellung der radial äußeren Einstellschraube (53) der Abstand der beiden Patronen (50, 51) zueinander und damit die Länge der offenen Ringspalte der Auslaß-Sitzventile (26, 27) einstellbar ist.

10. Hilfskraftlenkung nach Anspruch 8, dadurch **gekennzeichnet,** daß durch Verstellung der radial inneren Einstellschraube (46) die Lage der beiden Auslaß-Sitzventile (26, 27) zu der Betätigungseinrichtung (37) und damit ihre Symmetrie einstellbar ist.

## Claims

1. Power-assisted steering system for motor vehicles, having a steering valve (16) comprising two inlet seat valves (24, 25) and two outlet seat valves (26, 27) which are adjustable by means of an operating device (37) in dependence upon a rotary movement of a steering spindle,
- wherein the closing bodies (34) of the outlet seat valves (26, 27) and their operating plungers (35) are loaded by the force of centring springs (45) in the direction of the operating device (37) so that the operating plungers (35) rest against the operating device (37), the centring springs (45) at their ends remote from the operating plungers (35) being supported against a housing-fixed structural part,
- wherein the closing bodies (28) of the inlet seat valves (24, 25) are loaded by the force of locking springs (30) in closing direction and are therefore closed in the neutral position of the steering valve (16),
- wherein the outlet seat valves (26, 27) in the neutral position of the steering valve (16) are open via open annular gaps and
- wherein the inlet seat valves (24, 25) are opened only after closure of the respective associated outlet seat valve (26, 27),
characterized in
- that a limiting piston (38) is provided for each side of the steering valve (16),
- that each limiting piston (38) is acted upon, on the one hand, by the pressure prevailing in a working chamber (10, 11) of a servomotor (7) and, on the other hand, by a limiting spring (40) which, in the neutral position of the steering valve (16), holds the limiting piston (38) at a distance from the closing body (28) of the inlet seat valve (25),
- that in each case one centring spring (45) and one limiting spring (40) are supported at their ends directed towards the operating plunger (35) against a common spring cup (44), which is operationally connected to the operating plunger (35),
- that the limiting piston (38) rests against the closing body (28) of the inlet seat valve (25) and acts upon the latter when the force of the pressure acting upon the limiting piston (38) exceeds the force of the limiting spring (40) and
- that the effective cross section of the limiting piston (38) is smaller than the effective cross section of the closing body (28) of the inlet seat valve (25).

2. Power-assisted steering system according to claim 1, characterized in that the centring spring (45) is disposed coaxially inside the limiting spring (40).

3. Power-assisted steering system according to claim 1 or 2, characterized in that the operating plunger (35) has a cylindrical extension (36), which in a sealed manner penetrates the limiting piston (38) and establishes the operational connection to the spring cup (44).

4. Power-assisted steering system according to claim 3, characterized in that disposed in the extension (36) is a through-channel (42) for a connection of the one working chamber (10, 11) of the servomotor (7) to a limiting chamber (41) adjoining the limiting piston (38).

5. Power-assisted steering system according to claim 1, characterized in that the limiting spring (40) in the neutral position of the steering valve (16) applies the limiting piston (38) against a stop shoulder (43) of a steering housing (1) which receives the steering valve (16).

6. Power-assisted steering system according to one of claims 1 to 5, characterized in that in each case one inlet seat valve (24, 25) and one outlet seat valve (26, 27) are combined in an insertable or screw-in cartridge (51, 50).

7. Power-assisted steering system according to claim 6, characterized in that both cartridges (50, 51) are inserted from one side into the steering housing (1).

8. Power-assisted steering system according to claim 7, characterized in that the outer cartridge (50) screwed into the steering housing (1) has two adjusting screws (46, 53) arranged coaxially relative to one another.

9. Power-assisted steering system according to claim 8, characterized in that by adjusting the radially outer adjusting screw (53) the distance between the two cartridges (50, 51) and hence the length of the open annular gaps of the outlet seat valves (26, 27) is adjustable.

10. Power-assisted steering system according to claim 8, characterized in that by adjusting the radially inner adjusting screw (46) the position of the two outlet seat valves (26, 27) relative to the operating device (37) and hence their symmetry is adjustable.

## Revendications

1. Direction assistée pour véhicule à moteur, comportant une soupape de direction (16), présentant deux soupapes d'admission à sièges (24, 25) et deux soupapes d'échappement à sièges (26, 27) qui peuvent être réglées en fonction d'un mouvement de rotation d'un arbre de direction, par un dispositif d'activation (37),
- dans laquelle les organes de fermeture (34) des soupapes d'échappement à sièges (26, 27) et leurs poussoirs d'actionnement (35) sont sollicités par la force de ressorts de centrage (45) dans le sens du dispositif d'activation (37) de telle manière que les poussoirs d'actionnement (35) prennent appui contre le dispositif d'activation (37), les ressorts de centrage (45) prenant appui avec leur extrémité opposée aux poussoirs d'actionnement (35) contre une pièce fixe du boîtier,
- dans laquelle les organes de fermeture (28) des soupapes d'admission à sièges (24, 25) sont sollicités dans le sens de leur fermeture par la force de ressorts de maintien (30) et sont de ce fait fermées dans la position neutre de la soupape de direction (16),
- dans laquelle les soupapes d'échappement à sièges (26, 27) sont ouvertes dans la position neutre de la soupape de direction, et présentent des ouvertures annulaires, et
- dans laquelle les soupapes d'admission à sièges (24, 25) ne s'ouvrent qu'après la fermeture de la soupape d'échappement à siège (26, 27) correspondante,
**caractérisée en ce que,**
- un piston de limitation (38) est prévu de chaque côté de la soupape de direction (16),
- chaque piston de limitation (38) est alimenté d'une part par la pression hydraulique qui règne dans une chambre de travail (10, 11) d'un servomoteur (7) et d'autre part, par un ressort de limitation (40), qui maintient le piston de limitation (38) à distance de l'organe de fermeture (38) de la soupape d'admission à siège (25) dans la position neutre de la soupape de direction
- les ressorts de centrage (45) respectifs et les ressorts de limitation (40) prennent appui contre un assiette de ressort (44) commune par leur extrémité orientée vers le poussoir d'actionnement (35), cette assiette étant fonctionnellement couplée audit poussoir d'actionnement (35),
- le piston de limitation (38) prend alors appui contre l'organe de fermeture (28) de la soupape d'admission à siège (25) et agit sur elle lorsque la force exercée par la pression hydraulique sur le piston de limitation (38) dépasse la force agissant sur le ressort de limitation (40), et
- la section utile du piston de limitation (38) est inférieure à la section utile de l'organe de fermeture (28) de la soupape d'admission (25).

2. Direction assistée selon la revendication 1, **caractérisée en ce que** les ressorts de centrage (45) sont montés coaxialement à l'intérieur du ressort de limitation (40).

3. Direction assistée selon la revendication 1 ou 2, **caractérisée en ce que** le poussoir d'actionnement (35) présente une protubérance cylindrique (36) qui traverse de façon étanche le piston de limitation (38) et qui détermine la liaison active avec l'assiette du ressort (44).

4. Direction assistée selon la revendication 3, **caractérisée en ce que** la protubérance (36) comporte un canal traversant qui définit une liaison entre une des chambres de travail (10, 11) du servomoteur (7) et une chambre de limitation (41) voisine du piston de limitation (38).

5. Direction assistée selon la revendication 1, **caractérisée en ce que** le ressort de limitation (40) pousse le piston de limitation (38) contre un épaulement d'appui (43) d'une boîte de direction (1) contenant la soupape de direction (16), lorsque cette soupape de direction est dans sa position neutre.

6. Direction assistée selon l'une des revendications 1 à 5, **caractérisée en ce qu'une** des soupapes d'admission à siège (24, 25) et une des soupapes d'évacuation à siège (26, 27) sont respectivement montées dans une cartouche (51, 50) pouvant être mise en place par coulissement ou par vissage.

7. Direction assistée selon la revendication 6, **caractérisée en ce que** les deux cartouches (50, 51) sont montées par un côté dans la boîte de direction (1).

8. Direction assistée selon la revendication 7, **caractérisée en ce que** la cartouche extérieure (50) vissée dans la boîte de direction (1), présente deux vis de réglage (46, 53) disposées coaxialement.

9. Direction assistée selon la revendication 8, **caractérisée en ce que** le réglage de la longueur de l'ouverture annulaire des soupapes d'échappement à sièges (26, 27) peut être fait par le déplacement de la vis de réglage extérieure radiale (53) qui détermine la distance entre les deux cartouches (50, 51).

10. Direction assistée selon la revendication 8, **caractérisée en ce que** par le déplacement de la vis de réglage intérieure radiale (46), la position des deux soupapes d'échappement à sièges (26, 27) par rapport au dispositif d'activation (37) peut être réglée et permet ainsi le réglage de leur symétrie.
